(19) Europäisches Patentamt
European Patent Office
Office européen des brevets

(11) **EP 1 707 791 B1**

(12) **EUROPEAN PATENT SPECIFICATION**

(45) Date of publication and mention
of the grant of the patent:
**27.10.2010 Bulletin 2010/43**

(51) Int Cl.:
*F02M 31/04* <sup>(2006.01)</sup>  *F02B 1/12* <sup>(2006.01)</sup>
*F02P 5/15* <sup>(2006.01)</sup>  *F02D 21/08* <sup>(2006.01)</sup>

(21) Application number: **06006397.1**

(22) Date of filing: **28.03.2006**

(54) **Control system for spark-ignition type engine**

Steuervorrichtung einer Otto-Brennkraftmaschine

Dispositif de commande d'un moteur à allumage commandé

(84) Designated Contracting States:
**DE**

(30) Priority: **31.03.2005 JP 2005101920**
**31.03.2005 JP 2005102399**

(43) Date of publication of application:
**04.10.2006 Bulletin 2006/40**

(73) Proprietor: **Mazda Motor Corporation**
**Aki-gun,**
**Hiroshima 730-8670 (JP)**

(72) Inventors:
• **Yamakawa, Masahisa**
**Aki-gun**
**Hiroshima 730-8670 (JP)**
• **Nishimoto, Toshiaki**
**Aki-gun**
**Hiroshima 730-8670 (JP)**
• **Hayashi, Takayoshi**
**Aki-gun**
**Hiroshima 730-8670 (JP)**
• **Hitomi, Mitsuo**
**Aki-gun**
**Hiroshima 730-8670 (JP)**
• **Araki, Keiji**
**Aki-gun**
**Hiroshima 730-8670 (JP)**

(74) Representative: **Müller-Boré & Partner**
**Patentanwälte**
**Grafinger Straße 2**
**81671 München (DE)**

(56) References cited:
**EP-A- 1 136 675**    **JP-A- 11 006 436**
**JP-A- 11 062 589**   **JP-A- 2003 239 748**
**JP-A- 2003 269 201**  **US-B1- 6 675 579**

**Description**

**BACKGROUND OF THE INVENTION**

**1. Field of the Invention**

The present invention relates to a control system for a spark-ignition type engine, and more particularly to a control system for a spark-ignition type engine having an operation mode where it is operated under premixed-charge compression self-ignition combustion, so-called "homogenous- charge compression-ignition (HCCI) combustion" (as used in this specification, the HCCI will be referred to as "compression ignition").

**2. Description of the Related Art**

Heretofore, there has been known one type of spark-ignition engine which has intake-air heating means for heating intake-air. For example, Japanese Patent Laid-Open Publication No. 2003-269201 discloses a technique of increasing a temperature of air-fuel mixture to change an air-fuel ratio of the mixture to a leaner value during a transition from a high-load operation performed based on a spark-ignited forced ignition to a low-load operation performed based on a compression ignition, and lowering the temperature of air-fuel mixture to change the air-fuel ratio of the mixture to a richer value during a transition from the low-load operation to the high-load operation, so as to satisfy both reduction in pumping loss and enhancement in anti-knock performance between a misfire zone and a knock zone. Further reference is made to EPI 136 675 172 and to JP 11-006 436.

While an HCCI engine generally has the need to extend an operating range capable of performing a compression-ignition operation, such a need cannot be adequately satisfied only by changing an air-fuel ratio and an intake-air temperature between one operating range intended to perform a compression-ignition operation therein and another operating range intended to perform a forced-ignition operation therein. Specifically, it is additionally required to adjust the air-fuel ratio and the intake-air temperature depending on operational states in the operating range intended to perform the compression-ignition operation therein.

The control technique disclosed in the Japanese Patent Laid-Open Publication No. 2003-269201 is not designed to change an air-fuel ratio and an intake-air temperature in the operating range intended to perform the compression-ignition operation therein. Thus, if the intake-air temperature is set at a higher value to prevent misfiring in a low load-side operating range, a zone causing knocking will be extended. In the opposite manner, if the intake-air temperature is set at a lower value to avoid knocking in a high load-side operating range, the risk of misfiring will be increased in the low load-side operating range. Consequently, the above control technique cannot satisfy the need for extending an operating range capable of performing a compression-ignition operation.

In view of this problem, it is an object of the present invention to provide a spark-ignition type engine control system capable of achieving a compression-ignition operation in a wider operating range.

**SUMMARY OF THE INVENTION**

In order to achieve the above object, the present invention provides a control system for a spark-ignition type engine, which includes intake-air heating means for heating intake-air to be introduced into a cylinder of the engine, operational-state detection means for detecting an operational state of the engine, and control means for controlling the intake-air heating means based on the operational state detected by the operational-state detection means so as to perform a compression-ignition operation in a given operating range. The control system is characterized in that said given operating range includes a low load-side operating range having an engine load equal to or less than a given low-load threshold and a high load-side operating range having an engine load greater than the given low-load threshold, and the control means is operable to control the intake-air heating means in such a manner as to maintain an intake-air temperature at a relatively high value in the low load-side operating range, and, after the engine load exceeds the given low-load threshold, gradually lower the intake-air temperature along with an increase in engine load to allow the compression-ignition operation to be performed in the high load-side operating range.

According to the control system of the present invention, in the low load-side operating range included in the given operating range for performing the compression-ignition operation, an intake-air temperature can be maintained at a relatively high value to prevent the occurrence of misfiring in the low load-side operating range. Further, after the engine load exceeds the given low-load threshold, the intake-air temperature is lowered along with an increase in engine load to provide a slower combustion which is advantageous to anti-knocking. This makes it possible to allow the given operating range for performing the compression-ignition operation to be extended to the high load-side operating range or a high load-side so as to achieve enhanced fuel economy in the high load-side operating range.

In a preferred embodiment, the control means is operable to control the intake-air heating means in such a manner as to maintain the intake-air temperature at a given relatively high value in a region of the low load-side operating range where a maximum heat release rate appears at or after a compression top dead center. According to this embodiment, the compression-ignition operation can be effectively performed depending on engine loads. Specifically, through various researches, the inventor found that, when the level of intake-air heating is reduced along with an increase in engine load to lower an intake-air temperature, the initiation of combustion is delayed, and a maximum hear release rate $[(J/deg \cdot m^3)MAX]$ moves toward a compression bottom dead center. Based on this knowledge, the intake-air temperature is maintained at a given relatively high value in a region of the low load-side operating range where an maximum hear release rate appears at or after a compression top dead center, so as to allow the compression-ignition operation to be reliably performed in the low load-side operating range, and the level of intake-air heating is gradually reduced along with an increase in engine load so as to allow the given operating range for performing the compression-ignition operation to be extended to the high load-side operating range.

In a preferred embodiment, the control means is operable to control the intake-air heating means in such a manner as to maintain the intake-air temperature at a minimum value allowing for a compression ignition in a region of the low load-side operating range where a maximum heat release rate appears before the compression top dead center. According to this embodiment, the intake-air temperature can be maintained at the minimum value (e.g. 270°C) so as to achieve the compression-ignition operation in or around a no-load state while minimizing negative effects of a counter torque to be caused by premature combustion.

In a preferred embodiment, the control system includes ignition-timing advance means for advancing an ignition timing in the high load-side operating range. According to this embodiment, when the compression-ignition operation is maintained in the high load-side operating range after the engine load exceeds the given low-load threshold, the ignition-timing advance means can advance the timing of igniting an air-fuel mixture to prevent combustion of the air-fuel mixture from becoming excessively slow so as to output a higher torque.

In a preferred embodiment, the ignition-timing advance means comprises a plurality of spark plugs each disposed at a different position in the cylinder and adapted to be activated at a timing before initiation of a compression ignition, under control of the control means. According to this embodiment, the ignition timing can be reliably advanced in a relatively simple configuration.

In a preferred embodiment, the control system includes combustion-speed increase means for increasing a combustion speed of an ignited air-fuel mixture in the high load-side operating range. According to this embodiment, when the compression-ignition operation is maintained in the high load-side operating range after the engine load exceeds the given low-load threshold, the combustion-speed increase means can increase a combustion speed of an ignited air-fuel mixture to prevent the combustion of the air-fuel mixture from becoming excessively slow so as to output a higher torque.

In a preferred embodiment, the combustion-speed increase means comprises a plurality of spark plugs each disposed at a different position in the cylinder and adapted to be activated at a timing after initiation of a compression ignition, under control of the control means. According to this embodiment, the combustion speed can be reliably increased in a relatively simple configuration.

In a preferred embodiment, when the engine includes an external EGR system for recirculating EGR gas to an intake passage of the engine, the control means is operable to control the external EGR system in such a manner as to introduce the EGR gas into the intake passage at least in a high load side of the high load-side operating range. According to this embodiment, in the high load-side operating region where the compression ignition becomes inactive, the external EGR system can introduce EGR gas to avoid knocking and obtain excellent emission performance while adequately maintaining advance in ignition timing based on the ignition-timing advance means and increase in combustion speed based on the combustion-speed increase means.

In a preferred embodiment, the engine has a cylinder-bore axis which is offset rightward from a rotation center of a crankshaft of the engine when viewed from a side where the crankshaft is rotated clockwise. According to this embodiment, due to the cylinder-bore axis offset from the rotation center of the crankshaft, upward/downward moving speeds of a piston become asymmetric with respect to a top dead center, and the downward moving speed of the piston in an expansion stroke is relatively reduced. Thus, a combustion speed is increased relative to the downward moving speed of the piston. This is makes it possible to maintain an excellent combustion condition and increase energy acting on the piston so as to achieve enhanced fuel economy.

In a preferred embodiment, the control means is operable, in response to a transition from the high load-side operating range to a high load operating range having an engine load greater than that in the high load-side operating range, to deactivate the intake-air heating means and perform a spark ignition.

In the control system of the present invention, when the engine includes plural number of the cylinders each adapted to perform therein a combustion of an air-fuel mixture, fuel injection means for controllably injecting fuel into each of the combustion chamber, independently, and ignition means for igniting a mixture of the introduced intake-air and the injected fuel in each of the cylinders, the control means may be operable to control the intake-air heating means, the fuel injection means and the ignition means in such a manner as to perform a partial-cylinder operation for operating only a part of the cylinders in the low load-side operating range having an engine load equal to or less than the given low-load threshold in the given operating range for performing the compression-ignition operation, and increase the number of working cylinders in the high load-side operating range having an engine load greater than the given low-load threshold in the given operating range for performing the compression-ignition operation. According to this embodiment, in the low load-side operating range of the given operating range for performing the compression-ignition operation, the partial-cylinder operation is performed to increase a load per working cylinder and provide enhanced combustion stability in the working cylinder even if it has a relatively low in-cylinder temperature. This makes it possible to achieve the compression ignition under the condition of a relatively low in-cylinder temperature in a low-load engine operating range where the compression-ignition operation is most likely to become unstable. Thus, enhanced fuel economy can be maintained in a low-load operating range while avoiding the risk of preignition which would be caused by increasing an in-cylinder temperature. Further, in response to the transition from the low load-side operating range to the high load-side operating range, the number of working cylinders can be increased to prevent the occurrence of knocking during a high load operation.

In a preferred embodiment, the low load-side operating range includes a post-warm-up idling range. According to this embodiment, the compression ignition can also be performed in the idling range to provide further enhanced fuel economy and emission performance.

In a preferred embodiment, when the engine includes an external EGR device for recirculating EGR gas consisting of a part of burnt gas to an intake passage of the engine, the control means is operable to control the external EGR device in such a manner as to introduce the EGR gas into the intake passage at least in the high load-side operating range, and stop introducing the EGR gas in the low load-side operating range. According to this embodiment, during the compression-ignition operation, EGR gas can be introduced into the intake passage at least in the high load-side operating range to suppress an increase in in-cylinder temperature based on the EGR gas as inactive gas. This makes it possible to avoid the occurrence of knocking and allow the given operating range for performing the compression-ignition operation to be extended to the high load-side operating range. Further, in the low load-side operating range including the idling range, the EGR gas can be stopped to maintain high fuel economy. In addition, the compression-ignition operation is performed in the low load-side operating range. Thus, even if the EGR gas is not introduced, the emission performance can be maintained at a high level.

In a preferred embodiment, the control means is operable to control the external EGR device in such a manner as to introduce the EGR gas into the intake passage when all of the plurality of cylinders are operated under the compression-ignition operation. According to this embodiment, a knock limit during the compression-ignition operation can be extended to a higher load operating range.

In a preferred embodiment, the given low-load threshold is set based on an engine load which has a given maximum heat release rate causing an increase in occurrence frequency of knocking in the working cylinder during the partial-cylinder operation. According to this embodiment, an operating range providing enhanced fuel economy can be frequently used. Specifically, through various researches, the inventor found that a knock limit of the working cylinder appears at a constant maximum heat release rate $[(J/deg·m^3)MAX]$ under the condition of a given in-cylinder temperature and air-fuel ratio. Based on this knowledge, the given low-load threshold is determined on the basis of a given maximum heat release rate causing an increase in occurrence frequency of knocking in the working cylinder, so as to allow the given operating range for performing the compression-ignition operation to be extended to the high load-side operating range. This makes it possible to frequently use an operating range providing enhanced fuel economy.

In a preferred embodiment, when the engine includes air-fuel ratio adjusting means for adjusting an air-fuel ratio, the control mean is operable, in response to a transition from the high load-side operating range to a high load operating range having an engine load greater than that in the high load-side operating range, to perform a forced-ignition operation using the ignition means and control the air-fuel ratio adjusting means in such a manner as to adjust an air-fuel ratio during the compression-ignition operation at a leaner value than a theoretical air-fuel ratio. According to this embodiment, in the given operating range for performing the compression-ignition operation, an air-fuel ratio is set at a leaner value than a theoretical air-fuel ratio. This makes it possible to satisfy both the needs for avoiding knocking and improving fuel economy.

These and other objects, features and advantages of the invention will become more apparent upon reading the following detailed description along with the accompanying drawings.

## BRIEF DESCRIPTION OF THE DRAWINGS

FIG. 1 is a block diagram showing a schematic configuration of a control system according to one embodiment of the present invention.

FIG 2 is a schematic sectional view showing the structure of one cylinder of a 4-cycle gasoline engine illustrated in FIG. 1.

FIG 3 is a schematic diagram showing a piston of the engine in the control system according to the embodiment.

FIG 4 is a graph showing a relationship between crank angle and piston speed.

FIG. 5 is a schematic diagram showing a relationship between crank angle and piston displacement.

FIG 6 is a schematic enlarged top plan view of the cylinder.

FIG 7 is a block diagram showing an intake-air heating system serving as intake-air heating means in the control system according to the embodiment illustrated in FIG 1.

FIG. 8 is a graph showing one example of characteristic curves defining operating ranges, for use in controlling the engine depending on operational states in the control system according to the embodiment illustrated in FIG 1.

FIG. 9 is a graph showing characteristic curves of air-fuel ratio, intake-air temperature and EGR ratio for use in a partial-load operating range.

FIG 10 is a graph showing a relationship between crank angle and heat release rate used as a basic control condition set in a control unit.

FIG. 11 is a graph showing a relationship between crank angle and heat release rate used as a basic control condition set in the control unit.

FIG 12 is a graph showing a relationship between crank angle and heat release rate used as a basic control condition set in the control unit.

FIG. 13 is a graph showing one example of an ignition timing in the control system according to the embodiment.

FIG. 14 is a graph showing one example of characteristic curves defining operating ranges, for use in controlling the engine depending on operational states in a control system according to another embodiment.

FIG 15 is a graph showing a relationship between net thermal efficiency (IMEP) and indicated fuel consumption (ISFC) at 1500 rpm.

## DETAILED DESCRIPTION OF THE PREFERRED EMBODIMENTS OF THE INVENTION

With reference to accompanying drawings, a preferred embodiment of the present invention will now be described.

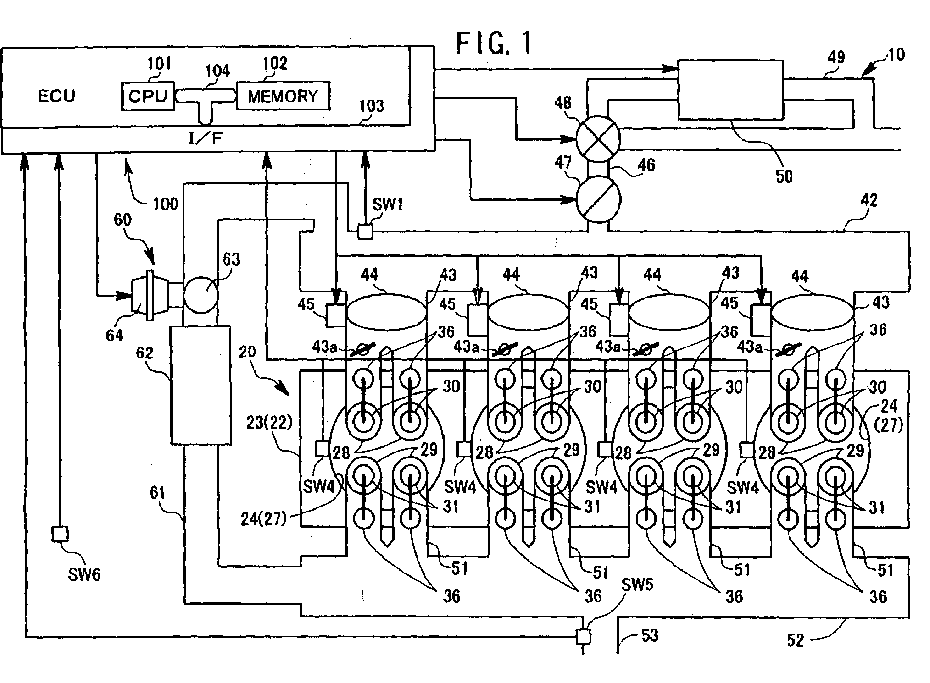

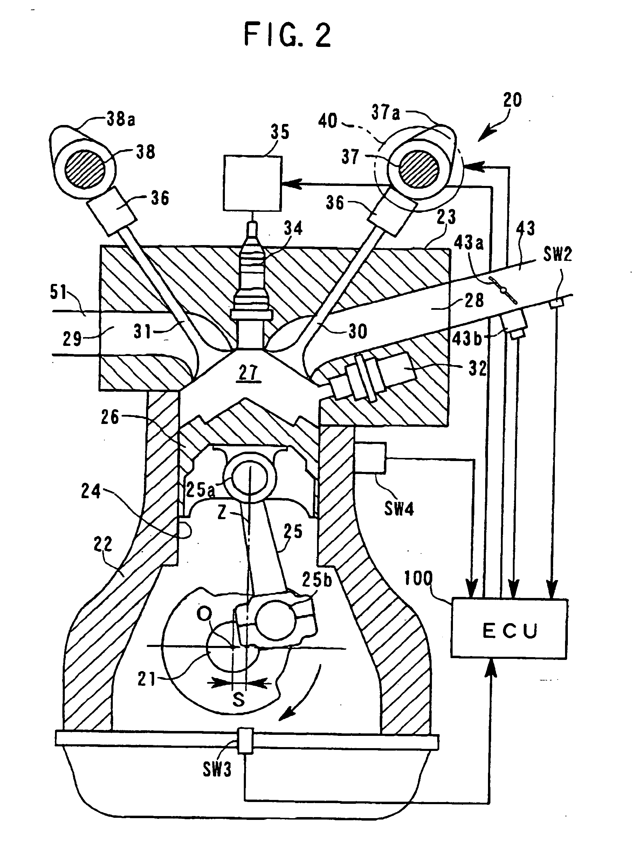

FIG 1 is a block diagram showing a schematic configuration of a control system 10 according to one embodiment of the present invention, and FIG. 2 is a schematic sectional view showing the structure of one cylinder of a 4-cycle gasoline engine 20 illustrated in FIG. 1.

Referring to FIGS. 1 and 2, the illustrated control system 10 comprises the 4-cycle gasoline engine 20 and a control unit 100 for controlling the engine 20.

The engine 20 includes a cylinder block 22 rotatably supporting a crankshaft 21, and a cylinder head 23 integrally attached to an upper portion of the cylinder block 22. The cylinder block 22 and the cylinder head 23 are formed with a plurality of cylinders 24.

Each of the cylinders 24 has a piston 26 connected to the crankshaft 21 through a connecting rod 25, and a combustion chamber 27 defined in the cylinder 24 by the piston 26. In this embodiment, each of the cylinders 24 is designed to have a geometric compression ratio of 14.

Referring to FIG. 2, the engine 20 in this embodiment has a cylinder-bore axis Z of the cylinder 24, which is offset rightward from a rotation center O of the crankshaft 21 when viewed from a side where the crankshaft 21 is rotated clockwise (i.e. in the state illustrated in FIG. 2). When the cylinder 24 has a bore of 70 mm, this offset S is set, for example, at 1 to 2 mm.

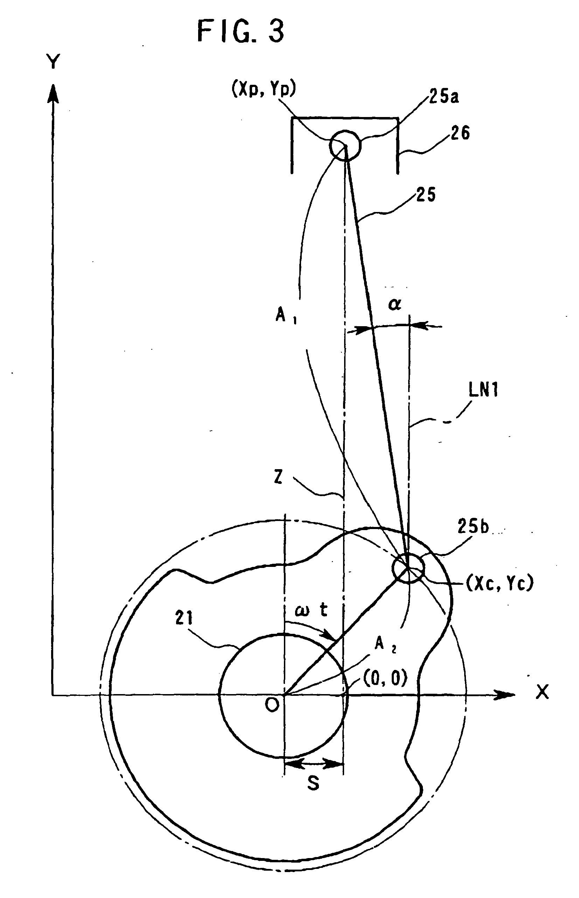

FIG. 3 is a schematic diagram showing the piston in this embodiment.

In FIG 3, given that a distance between a rotation center of a piston pin 25a connecting the connecting rod 25 and the piston 25 and a rotation center of a crank pin 25b connecting the connecting rod 25 and the crankshaft 21, a distance between the rotation center of the crank pin 25b and a rotation center O of the crankshaft 21, and the offset, are, respectively, $A_1$, $A_2$ and S. Further, given that an angle between the connecting rod 25 and a vertical line LN1 passing through the crank pin 25b is $\alpha$, and an angular speed of the crankshaft 21 is $\omega$.

Based on FIG 3, given that a coordinate of an intersecting point between a horizontal line passing through the enter O of the crankshaft 21 and the cylinder-bore axis Z is (0, 0), a coordinate (Xp, Yp) of the rotation center of the piston pin 25a and a coordinate (Xc, Yc) of the rotation center of the crank pin 25b are expressed, respectively, by the following Equations 1 and 2:

$$(Xp, Yp) = (0, \quad -A_2 \cos \omega t + A_1 \cos \alpha) \qquad \text{---- (Equation 1)}$$

$$(Xc, Yc) = (A_2 \sin \omega t - S, \quad A_2 \cos \omega t) \qquad \text{---- (Equation 2)}$$

A constraint condition of the piston is expressed by the following Equation 3:

$$A_2 \sin \omega t - S = A_1 \sin \alpha \qquad \text{---- (Equation 3)}$$

Then, the following Equation 4 is obtained by differentiating each of the sides of Equation 3:

$$\frac{d\alpha}{dt} = \frac{A_2 \, \omega \, \cos \omega t}{A_1 \, \cos \alpha} \qquad \text{---- (Equation 4)}$$

Then, as shown in the following Equation 5, a speed v of the piston 26 is calculates by differentiating the Yp component in Equation 1 with respect to "t", and assigning Equation 4 thereto:

$$v = \frac{dYp}{dt} = -A_2 \, \omega \, \sin \omega t - A_1 \sin \alpha \, \frac{d\alpha}{dt}$$

$$= -A_2 \, \omega \, \sin \omega t - A_2 \, \omega \, \cos \omega t \cdot \tan \alpha \qquad \text{---- (Equation 5)}$$

The angle $\alpha$ is obtained from Equation 3 as follows:

$$\alpha = \sin^{-1}\left( \frac{A_2 \sin \omega t - S}{A_1} \right) \qquad \text{---- (Equation 6)}$$

Then, the piston speed v is obtained by assigning Equation 6 to Equation 6, as follows:

$$v = -A_2 \, \omega \, \sin \omega t - A_2 \, \omega \, \cos \omega$$

$$\cdot \tan\left[ \sin^{-1}\left( \frac{A_2 \sin \omega t - S}{A_1} \right) \right] \qquad \text{---- (Equation 7)}$$

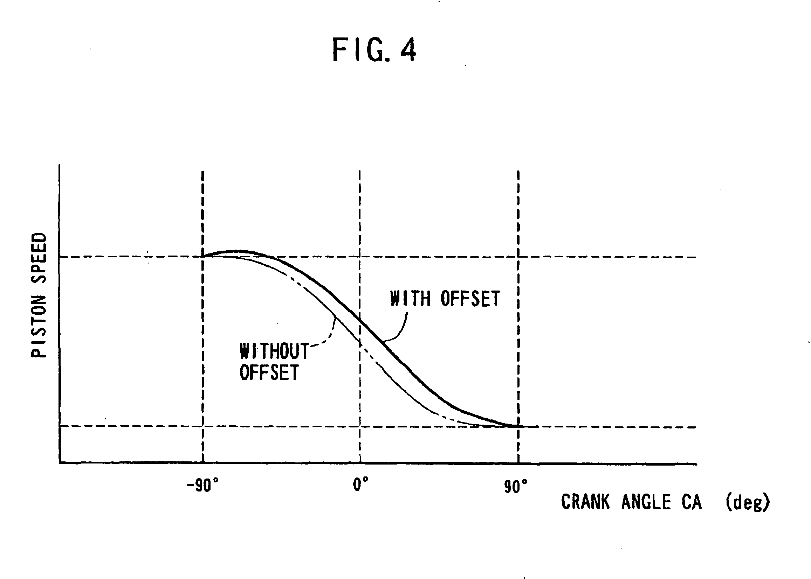

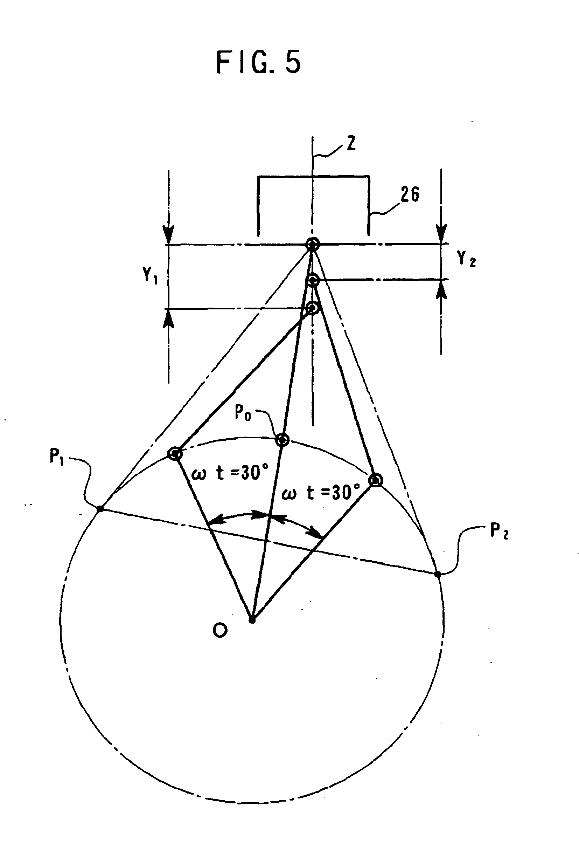

FIG. 4 is a graph showing a relationship between crank angle and piston speed, and FIG. 5 is a schematic diagram showing a relationship between crank angle and piston displacement.

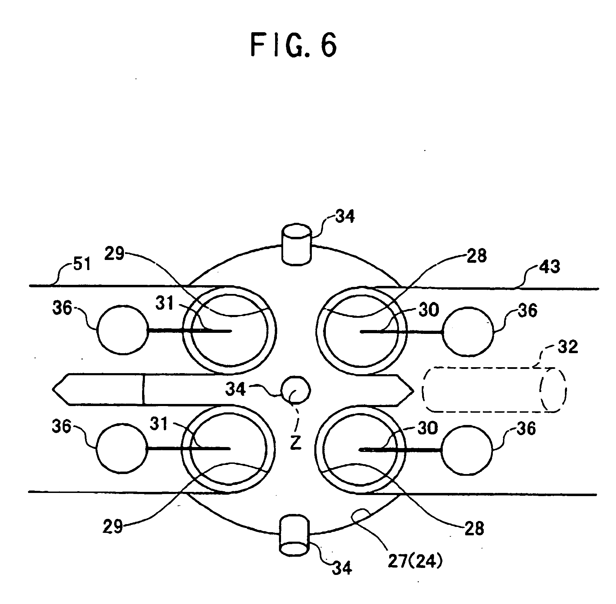

Referring to FIGS. 4 and 5, as is clear from Equation 5, if the offset S = zero, tan a = zero at t = zero, and therefore the speed v of the piston 26 becomes approximately equal to a sine wave. In contrast, when the offset S > zero, the speed v of the piston 26 has an asymmetric waveform due to a value of the second term of equation 5 or 7, points P1, P2 where the piston 26 is moved at the fastest speed (a contact point of a straight line passing through a top dead center of the piston 26 with a locus 25L of the crank pin 25b) have a left-right asymmetric pattern. Thus, for example, assuming displacements $Y_1$, $Y_2$ corresponding, respectively, to the same crank angles $\omega t$ (= 30°) on either side of a point P0 when the piston 26 is located at the top dead center, the displacement $Y_1$ from the vicinity of the top dead center toward a bottom dead center is relatively increased or the piston 26 is moved at a relatively high speed, and whereas the displacement Y2 after passing through the top dead center is relatively reduced or the piston 26 is moved at a relatively low speed, as is clear from Fig. 5. FIG. 6 is a schematic enlarged top plan view of the cylinder 24.

Referring to FIG 6, the cylinder head 23 has a bottom surface formed with a roof portion of the combustion chamber 27 in each of the cylinders 24. This roof portion is formed as so-called "pent-roof type" which has a two inclined surfaces each extending from a central region thereof to a bottommost surface of the cylinder head 23.

The roof portion of the combustion chamber 27 has four openings of two independent intake ports 28 and two independent exhaust ports 29, and these openings are arranged in an approximately symmetric pattern. Each of an intake valve 30 and an exhaust value 31 is disposed at a corresponding one of the openings.

The combustion chamber 27 is provided with a fuel injection valve 32 at a peripheral portion thereof. The fuel injection valve 32 is operable to receive a fuel injection pulse from the control unit 100 and inject fuel into the combustion chamber 27 in an amount corresponding to the pulse width of the received fuel injection pulse.

Additionally referring to FIG 2, each of the cylinders 24 is provided with three spark plugs 34 each fixed to the cylinder head 23 and adapted to generate a spark inside the combustion chamber 27. The spark plugs 34 are aligned along a diametral line parallel to a ridge line of the piston 26. More specifically, a central one of the spark plugs 34 is located at the cylinder-bore center Z, and each of lateral ones of the spark plugs 34 is located at a peripheral edge of the combustion chamber 27. Each of the spark plugs 34 is electrically connected to an ignition circuit 35 adapted to adjust an ignition timing on an electronic control basis. The control unit 100 is operable to control the ignition circuit 35 in such a manner that one or more of the spark plugs 34 are selectively activated and ignition-controlled.

Referring to FIG. 2, each of the intake valves 30 and the exhaust valves 31 in each of the cylinders 24 is associated with a conventional tappet unit 36. The tappet unit 36 is designed to be periodically driven by a cam (37a, 38a) of a camshaft (37, 38) of a valve driving mechanism disposed in the cylinder head 23. The valve driving mechanism for the intake valve 30 includes a variable valve-timing mechanism 40 for variably changing an open/close timing of the intake valve 30. The variable valve-timing mechanism 40 is designed to change an intake-valve open timing between a first timing set around an intake top dead center and a second timing advanced from the first timing, depending on operational states.

Referring to FIGS. 1 and 2, four branched air-intake pipes 43 of an intake manifold 42 are connected to the intake ports 28 of the engine 20. The branched air-intake pipes 43 are designed to form air-intake passages of equal length in the intake manifold 42 individually, and fluidically connected, respectively, to the cylinders 24, In the illustrated embodiment, the pair of intake ports 28 is formed in each of the cylinders 24, and a downstream end of the branched air-intake pipe 43 is formed as a fork shape in conformity to the pair of intake ports 28 in each of the cylinders 24. Each of the branched air-intake pipes 43 has an upstream portion provided with an openable/closable control valve 44. The control valve 44 is composed of a three-way solenoid valve, and designed to open and close the upstream portion of the branched air-intake pipe 43 at a desired level in an independent manner. Further, as shown in FIG. 2, a conventional swirl-forming control valve 43a is disposed in one of the fork-shaped passages in each of the branched air-intake pipes 43. The swirl-forming control valve 43a is driven by an actuator 43b in an openable/closable manner. When one of the fork-shaped passages of the branched air-intake pipe 43 is closed by the swirl-forming control valve 43a, intake air passing through the other fork-shaped passage forms a swirl in the combustion chamber 27, and then the swirl becomes weaker as the swirl-forming control valve 43a is gradually opened.

A single air-intake passage 46 is fluidically connected to an upstream end of the intake manifold 42 to introduce flesh air into the intake manifold 42. The air-intake passage 46 is provided with a throttle valve 47. The air-intake passage 46 is further provided with a three-way solenoid valve 48 on an upstream side of the throttle valve 47, and a heater 50 serving as intake-air heating means is interposed in a bypass passage 49 fluidically connected to the three-way solenoid valve 48. Specifically, the three-way solenoid valve 48 is designed to be switched in such a manner as to selectively introduce either one of outside flesh air itself and air heated by the heater 50, into the intake manifold 42.

As shown in FIG. 1, a pair of fork-shaped branched exhaust pipes 51 are fluidically connected, respectively, to the two exhaust ports 29 in each of the cylinders 24. Each of the branched exhaust pipes 51 has a downstream end fluidically connected to an exhaust manifold 52. The exhaust manifold 52 is fluidically connected to an exhaust passage 53 for discharging burnt gas.

Referring to FIGS. 1 and 2, an external EGR system 60 is provided between the intake manifold 42 and the exhaust manifold 52 to recirculate the exhausted burnt gas to the intake manifold 42.

This external EGR system 60 has a conventional structure which comprises a recirculation passage formed between the intake manifold 42 and the exhaust manifold 52, an EGR cooler 62, an EGR valve 63, and an actuator 64 for driving the EGR valve 63.

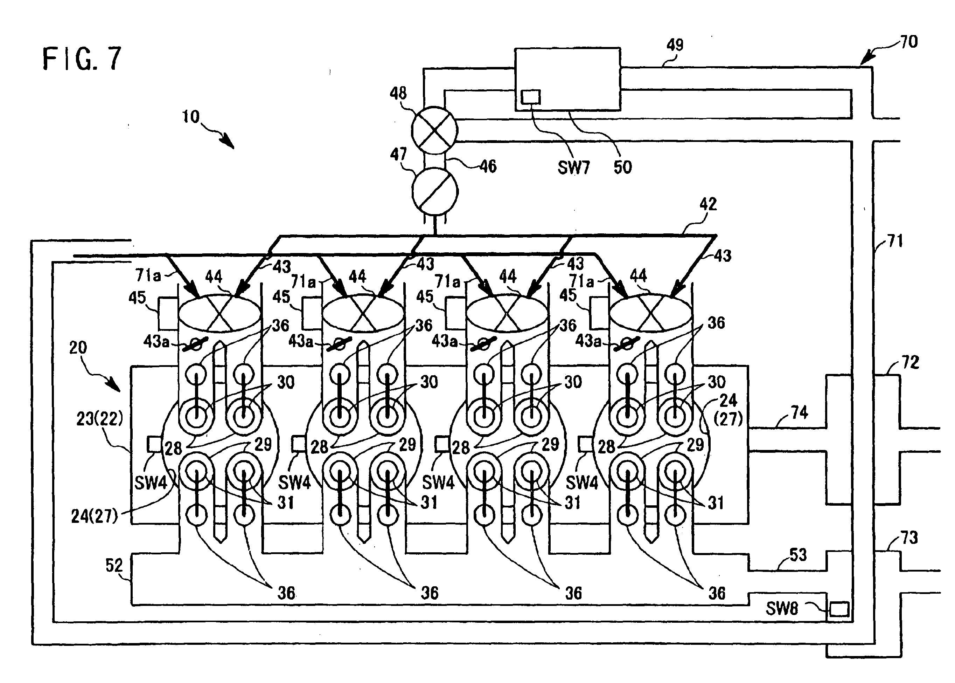

FIG. 7 is a block diagram showing an intake-air heating system 70 serving as intake-air heating means in the control system according to the embodiment illustrated in FIG 1.

Referring to FIG. 7, the air-intake passage 46 is provided with the three-way solenoid valve 48 on the upstream side of the throttle valve 47, and the heater 50 is interposed in the bypass passage 49 fluidically connected to the three-way solenoid valve 48, as mentioned above. As with the control valve 44, the three-way solenoid valve 48 is designed to change a valve opening ratio under control of the control unit 100. Thus, the three-way solenoid valve 48 is designed to be switched in such a manner as to selectively introduce either one of outside air and air heated by the heater 50, into the intake manifold 42 at a desired ratio.

Further, a heating passage 71 is branched from the air-intake passage 46, and a coolant-based heat exchanger 72 and an exhaust gas-based heat exchanger 73 are interposedly associated with the heating passage 71.

The heating passage 71 is provided as a means to recirculate heat absorbed through the heat exchanger 72, 73, to the intake system. The heating passage 71 has a downstream portion formed as four branched pipes 71a branched for each of the cylinders 24. Each of the branched pipes 71a is fluidically connected to an air-intake-side port of a corresponding one of the control valves 44.

The coolant-based heat exchanger 72 is fluidically connected to a water-cooling system 74 of the engine 20 to serve as a means to allow intake air passing through the heating passage 71 to absorb heat of coolant to be recirculated from the engine 20 toward a radiator (not shown).

The exhaust gas-based heat exchanger 73 is fluidically connected to the exhaust passage 53 of the engine 20 to serve as a means to allow intake air passing through the heating passage 71 to absorb heat of burnt gas. In the heating passage 73, the exhaust gas-based heat exchanger 73 is located on a downstream side of the coolant-based heat exchanger 72.

In this embodiment, the aforementioned heater 50 and these heat exchangers 72, 73 serve as primary components of the intake-air heating system 70.

Referring to FIG 1, in order to detect an operational state of the engine 20, the air-intake passage 46 is provided with an airflow sensor SW1, and an intake-air temperature sensor SW2 (see FIG. 2) disposed on a downstream side of the control valve 44 to estimate an in-cylinder temperature. Further, the cylinder block 22 is provided with a crank angle sensor SW3 for detecting a rotational speed of the crankshaft 21, and an engine coolant temperature sensor SW4 (see FIG. 2) for detecting a coolant temperature. The exhaust passage 53 is provided with an oxygen (concentration) sensor SW5 for use in controlling an air-fuel ratio. The heater 50 and the exhaust gas-based heat exchanger 73 are provided, respectively, with temperature sensors SW7, SW8 for detecting a temperature of intake air heated by the heater 50 in the bypass passage 49, and a temperature of the exhaust gas-based heat exchanger 73 in the heating passage 71 (see FIG. 7).

The engine 20 has the control unit 100 serving as control means. Each of the airflow sensor SW1, the intake-air temperature sensor SW2, the crank angle sensor SW3, the engine coolant temperature sensor SW4, the oxygen sensor SW5, an accelerator opening sensor SW6 for detecting an engine load and the temperature sensors SW7, SW8 are electrically connected to the control unit 100 as input elements. Each of the sensors SW1 to SW8 is a specific example of an operational-state detecting sensor in this embodiment. Further, an actuator 45 of the control valve 44, an actuator of the throttle valve 47, the variable valve timing mechanism 40, the actuator 43b of the swirl-forming control valve 53a, the three-way solenoid valve 48 of the intake passage 46, the heater 50 and the actuator 64 of the external EGR system 60 are electrically connected to the control unit 100 as control elements.

Referring to FIG. 1, the control unit 100 comprises a CPU 101, a memory 102, an interface 103 and a bus 104 connecting between these units 101 to 103, and functionally serves as operational-state determination means for determining an operational state.

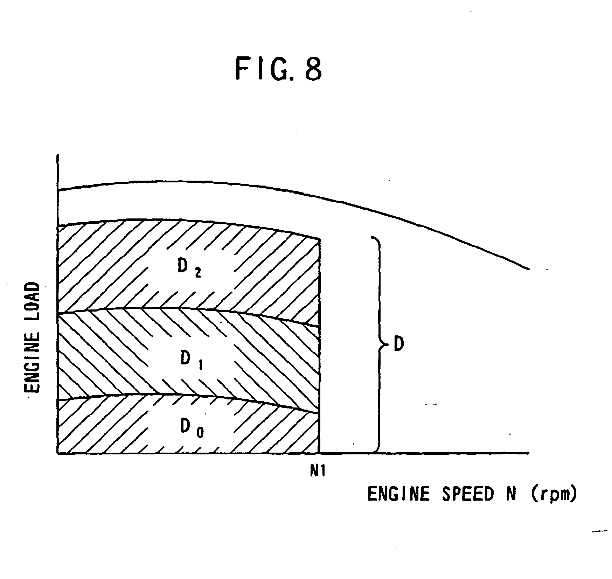

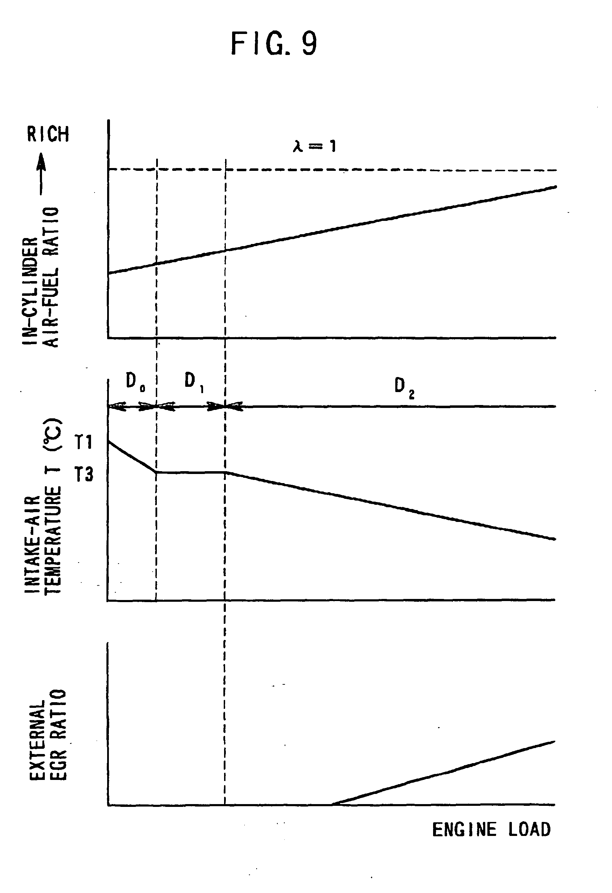

FIG 8 is a graph showing one example of characteristic curves defining operating ranges, for use in controlling the engine depending on operational states in the control system according to the embodiment illustrated in FIG. 1. FIG. 9 is a graph showing characteristic curves of air-fuel ratio, intake-air temperature and EGR ratio for use in a partial-load operating range D in FIG 8.

Referring to FIG. 8, in the illustrated embodiment, a compression-ignition operation is performed in a partial-load operating range D where an engine speed N is equal to or less than a given value N1, and a spark-ignited enforced ignition operation is performed in the remaining operating range.

As shown in FIG 8, in the partial-load operating range D for performing the compression-ignition operation, an air-fuel ratio is approximately linearly enriched as an engine load is increased or in a direction from a low load-side operating range to a high load-side operating range. As to an intake-air temperature T, as shown in FIG. 9, the intake-air temperature T is maintained at a relatively high value in two low load-side operating ranges $D_1$, $D_0$ having an engine load equal to or less than a given low-load threshold, and gradually lowered along with an increase in engine load in a high load-side operating range $D_2$ having an engine load greater than the given low-load threshold.

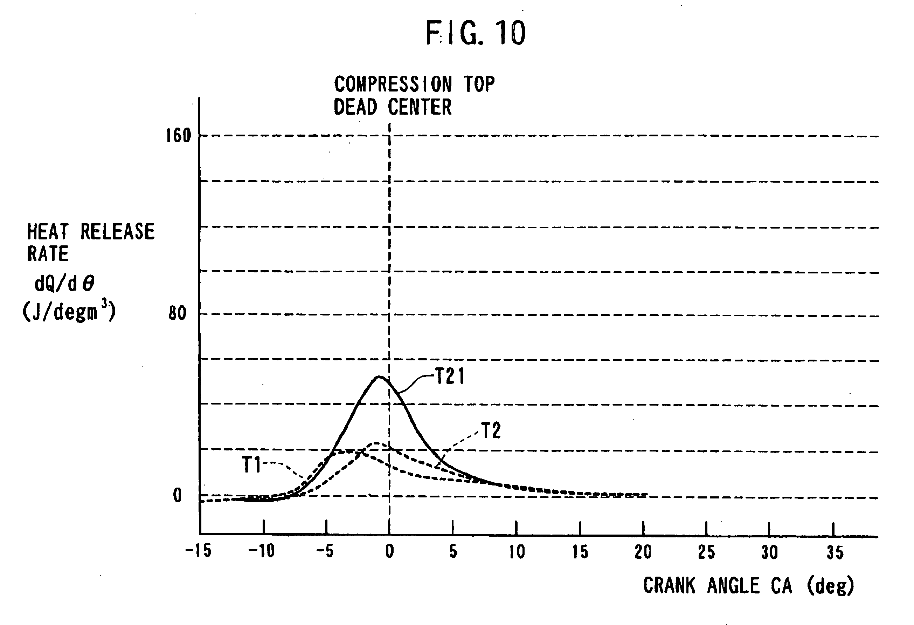

FIGS. 10 to 12 are graphs showing a relationship between crank angle and heat release rate (dQ/d0) used as a basic control condition set in a control unit 100. These graphs were obtained as inventor's research result. A control map based on these graphs is stored on the memory 1,02 of the control unit 100. In FIGS. 10 to 12, a curve indicated by the dashed line shows a characteristic when a fuel injection amount is set at a minimum value allowing for the compression ignition under the condition of full throttle opening, and a curve indicated by the solid line shows a characteristic when an air-fuel ratio is reduced to a knock limit under the condition of the same intake-air temperature as that in the dashed curve. A code attached to the solid curve is expressed by adding a suffix to a code of the dashed curve with the corresponding intake-air temperature T.

Referring to FIG. 10, when the engine 20 is operated based on the compression ignition in a no load state, the intake-air temperature T is required to be set at T1 (= 270°C). At this temperature T1, the maximum heat release rate [(dQ/dθ) MAX] appears before a compression top dead center. Thus, if the air-fuel ratio is reduced in this state, a counter torque will be increased. Even at T2 (= 250°C) less than T1 by 20°C, the maximum heat release rate [(dQ/dθ) MAX] still appears before the compression top dead center. Thus, if the fuel injection amount is increased, a large counter torque will be generated. From this point of view, in this embodiment, as to an intake-air temperature and an air-fuel ratio for performing the compression-ignition operation in the operating range $D_0$ where the maximum heat release rate [(dQ/dθ) MAX] appears before the compression top dead center, the intake-air temperature is set at a minimum value necessary for the compression-ignition operation, and the air-fuel ratio is set at an extremely lean value, as shown in FIG 9.

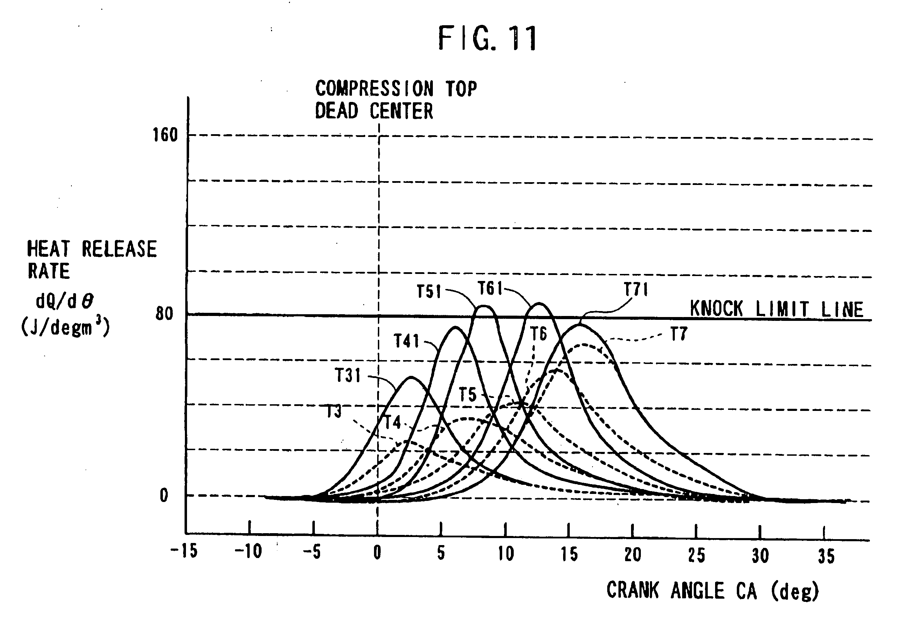

Referring to FIG. 11, as shown in the curves where the intake-air temperature T is set at T3 (= 225°C), T4 (= 205°C), T5 (= 190°C), T6 (= 175°C) and T7 (= 160°C), when the engine load is increased, the maximum heat release rate [(dQ/dθ) MAX] appears after the compression top dead center. From this point of view, in this embodiment, the intake-air temperature T in the operating ranges $D_1$ is maintained at T3, and the fuel injection amount is increased to a value close to the knock limit.

When the engine load is increased beyond the operating ranges $D_2$, the intake-air temperature T is gradually lowered to T4, --- T7 along with an increase in engine load to allow an operating range capable of performing the compression-ignition operation to be extended to a higher load operating range, while preventing the occurrence of knocking.

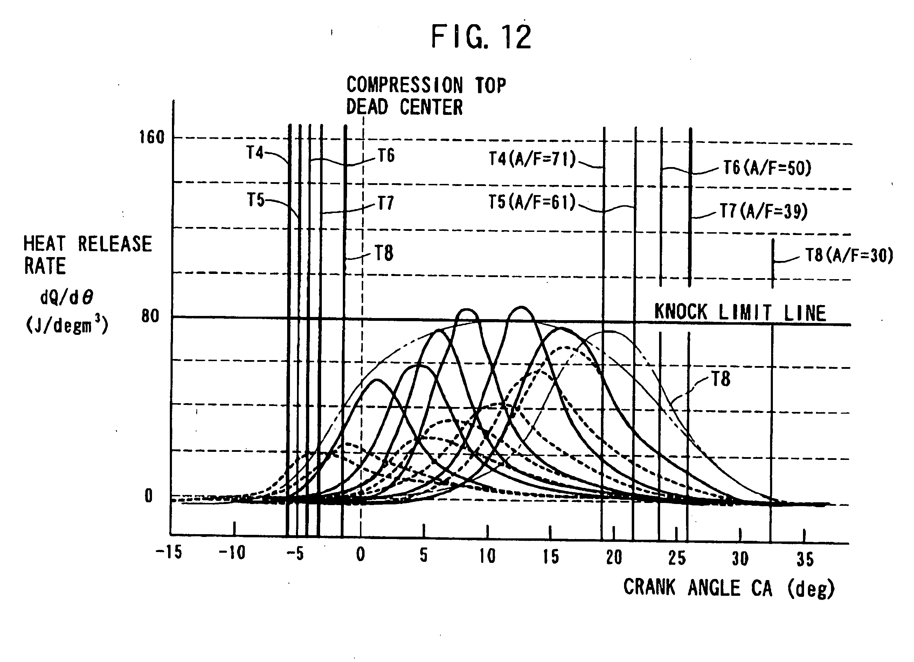

Referring to FIG. 12, as indicated by the two-dot chain lines, when the characteristic curves T1 to T7 are superimposed on each other, the heat release rates (dQ/dθ) generally form a chevron-shaped knock limit curve having a peak at a given value (about 80 J/deg·m$^3$). Thus, in this embodiment, the intake-air temperature T is lowered using this heat release rate (dQ/dθ) (about 80 J/deg·m$^3$) as an upper limit. In FIG. 12, the straight lines on the left side of the figure indicate combustion initiation timings, respectively, at the intake-air temperatures T1 to T7, and the straight lines on the right side of the figure indicate combustion completion [Mass Fraction Burnt (MFB) = 95%] limits having a combustion variation rate of 5% or less.

Referring to F1GS. 11 and 12, when the engine load is further increased, and correspondingly the intake-air temperature T is lowered, a combustion initiation timing itself in the combustion of air-fuel mixture will be delayed in proportion to the lowering of intake-air temperature, and the maximum heat release rate [(dQ/dθ) MAX] will get closer to a compression bottom dead center. Therefore, as shown in FIG 12, at a given low intake-air temperature T (T8 = 150°C), an air-fuel ratio A/F allowing for the compression ignition reaches 30 (λ = 2), and the maximum heat release rate [(dQ/dθ) MAX] appears at a crank angle of 15°. Thus, in this embodiment, in an NA (Natural Aspiration) engine without an external EGR, an upper limit of the operating range $D_2$ in FIG. 8 is determined on the basis of the conditions where the air-fuel ratio λ = 2, and an spark ignited enforced ignition is performed in a high-load operating region exceeding the upper limit of the operating range $D_2$.

As mentioned above, when the intake-air temperature T is gradually lowered, the combustion initiation timing will be increasingly delayed, and maximum heat release rate [(dQ/dθ) MAX] will appear at a crank angle moved from the compression top dead center toward the compression bottom dead center. Thus, in this embodiment, various techniques are used for advancing an ignition timing and/or increasing a combustion speed to allow the operating range capable of performing the compression ignition to be extended to a higher load operating range.

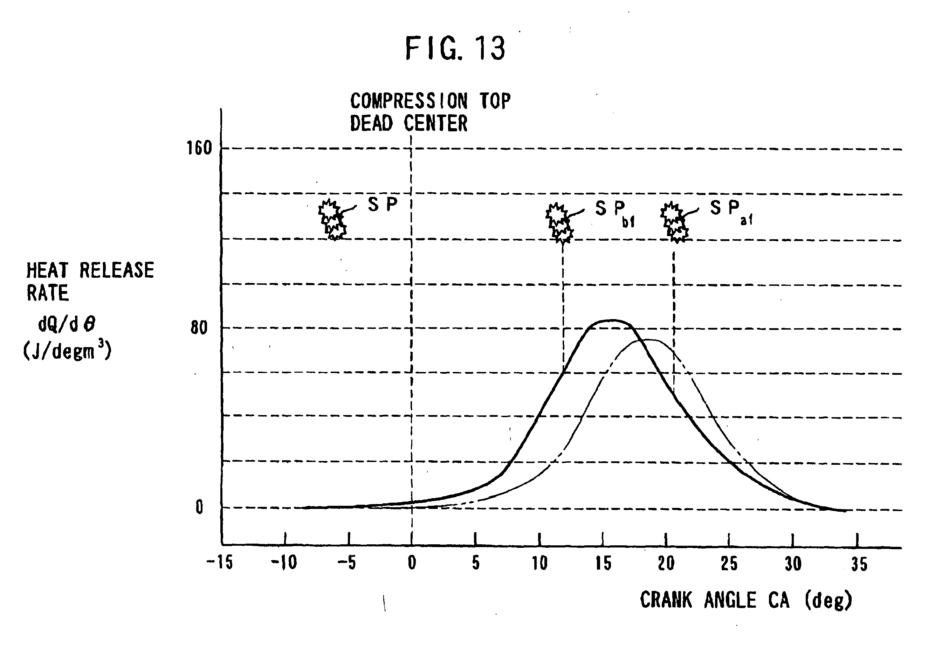

FIG. 13 a graph showing one example of an ignition timing in the control system according to this embodiment.

Referring to FIGS. 8, 9 and 13, when the engine operation makes a transition to the high load-side operating range $D_2$ during the compression-ignition operation, the combustion initiation timing is delayed due to lowering of the intake-air temperature T, and the maximum heat release rate f(dQ/dθ) MAX] appears at a fairly delayed point as indicated by the two-dot chain line in FIG. 13. Thus, in this embodiment, in the operating range $D_2$, a multi-point ignition SPbf is performed at a crank angle CA before the maximum heat release rate [(dQ/dθ) MAX] appears, so as to advance the ignition timing. This makes it possible to advance an ignition timing based on the compression ignition from the characteristic curve, indicated by the two-dot chain line to the characteristic curve indicated by the solid line.

Further, in the operating range $D_2$, a multi-point ignition SPaf is performed at a crank angle CA after the maximum heat release rate [(dQ/dθ) MAX] appears, so as to increase a combustion speed. This makes it possible to increase a combustion speed based on the compression ignition from the characteristic curve indicated by the two-dot chain line to the characteristic curve indicated by the solid line.

When the ignition-timing advance means and/or the combustion-speed increase means as shown in FIG. 13 are employed, the multi-point ignition is likely to cause the risk of occurrence of knocking. Thus, in this embodiment, the external EGR system is activated in a high load side of the operating range $D_2$ to introduce EGR gas, as shown in FIG. 9.

In FIG. 13, SP indicates a spark-assisting ignition before the compression top dead center.

As described above, in this embodiment, in the operating range D for performing the compression-ignition operation, the intake-air temperature T is maintained at a relatively high value in the low load-side operating ranges $D_1$, $D_0$ having poor combustion stability. This makes it possible to prevent the occurrence of misfiring. Further, when the engine load exceeds the low load-side operating range $D_1$, the level of the intake-air heating is reduced along with an increase in engine load, and thereby the intake-air temperature T is lowered to produce a slower combustion which is advantageous to anti-knocking. This makes it possible to allow the operating range D for performing the compression-ignition operation to be extended to a higher load operating range so as to achieve enhanced fuel economy in the higher load operating range.

In this embodiment, in the operating range D for performing the compression-ignition operation, the control unit 100 controls the heater 50 in such a manner as to maintain the intake-air temperature T at a relatively high value in the operating ranges $D_1$ having the maximum heat release rate [(dQ/dθ) MAX] appearing at or after the compression top dead center, and then reduce the level of intake-air heating along with an increase in engine load. Thus, according to this embodiment, even if the engine load is increased, the compression-ignition operation can also be performed in the high load-side operating range. Specifically, as shown in FIGS. 10 to 12, it was found that, when the level of intake-air heating is reduced along with an increase in engine load, the maximum heat release rate [(J/deg·m$^3$)MAX] (dQ/d0) is moved toward the compression bottom dead center. Thus, the intake-air temperature T is maintained at a maximum value in a region having the maximum heat release rate [(dQ/dθ) MAX] appearing at or after the compression top dead center, so as to maintain the compression-ignition operation in the low load-side operating range, and then the level of intake-air heating is reduced along with an increase in engine load so as to allow the operating range D capable of performing the compression-ignition operation to be extended to a higher load operating range.

In this embodiment, in the operating range D for performing the compression-ignition operation, the control unit 100 controls the heater 50 in such a manner as to maintain the intake-air temperature T at a minimum value allowing for the compression ignition in the operating range $D_0$ where the maximum heat release rate maximum heat release rate [(dQ/dθ) MAX] appears before the compression top dead center. Thus, according to this embodiment, the intake-air temperature T can be maintained at the minimum value (e.g. 270°C) so as to achieve the compression-ignition operation in or around a no-load state while minimizing negative effects of a counter torque to be caused by premature combustion.

In this embodiment, as ignition-timing advance means for advancing an ignition timing in the high load-side operating range $D_2$, the control as shown in FIG 13 is performed. Thus, according to this embodiment, when the compression-ignition operation is maintained in the high load-side operating range $D_2$ after the engine load exceeds a given low-load threshold, the timing of igniting an air-fuel mixture can be advanced to prevent combustion of the air-fuel mixture from becoming excessively slow so as to output a higher torque.

Particularly, in this embodiment, the ignition-timing advance means comprises the plurality of spark plugs 34 per cylinder, and the control unit 100 operable to perform the multi-point ignition using the spark plugs 34 before initiation of the compression ignition. Thus, according to this embodiment, the ignition timing can be reliably advanced in a relatively simple configuration.

In this embodiment, as combustion-speed increase means for increasing a combustion speed of an ignited air-fuel mixture in the high load-side operating range $D_2$, the control as shown in FIG. 13 is performed. Thus, according to this embodiment, when the compression-ignition operation is maintained in the high load-side operating range $D_2$ after the engine load exceeds the given low-load threshold, a combustion speed of an ignited air-fuel mixture can be increased to prevent the combustion of the air-fuel mixture from becoming excessively slow so as to output a higher torque.

Particularly, in this embodiment, the combustion-speed increase means comprises the plurality of spark plugs 34 per cylinder, and the control unit 100 operable to perform the multi-point ignition using the spark plugs 34 after initiation of the compression ignition. Thus, according to this embodiment, the combustion speed can be reliably increased in a relatively simple configuration.

In this embodiment, the external EGR system 60 for recirculating EGR gas to the intake passage 46 is provided in the engine, and the control unit 100 controls the external EGR system 60 in such a manner as to introduce the EGR gas into the intake passage 46 at least in a high load side of the high load-side operating range $D_2$. Thus, according to this embodiment, in a high load side of the high load-side operating region $D_2$ where the compression ignition becomes inactive, the external EGR system 60 can introduce EGR gas to avoid knocking and obtain excellent emission performance while adequately maintaining advance in ignition timing based on the ignition-timing advance means and increase in combustion speed based on the combustion-speed increase means.

Particularly, in this embodiment, the engine 20b has the cylinder-bore axis Z which is offset rightward from the rotation center O of the crankshaft 21 when viewed from a side where the crankshaft 24 is rotated clockwise. Thus, according to this embodiment, due to the cylinder-bore axis Z offset from the rotation center O of the crankshaft 21, upward/downward moving speeds of the piston 26 become asymmetric with respect to the top dead center, and the downward moving speed of the piston 26 in an expansion stroke is relatively reduced. Thus, a combustion speed is increased relative to the downward moving speed of the piston 26. This is makes it possible to maintain an excellent combustion condition and increase energy acting on the piston 26 so as to achieve enhanced fuel economy.

In this embodiment, in response to a transition from the high load-side operating range $D_2$ to a high load operating range having an engine load greater than that in the high load-side operating range $D_2$, the heater 50 is deactivated, and a spark ignition is performed.

As above, according to this embodiment, an operating range capable of performing the compression-ignition operation can be extended to a higher load operating range to achieve enhanced fuel economy in the higher load operating range. This makes it possible to provide a significant effect of being able to achieve the compression-ignition operation in a wider operating range.

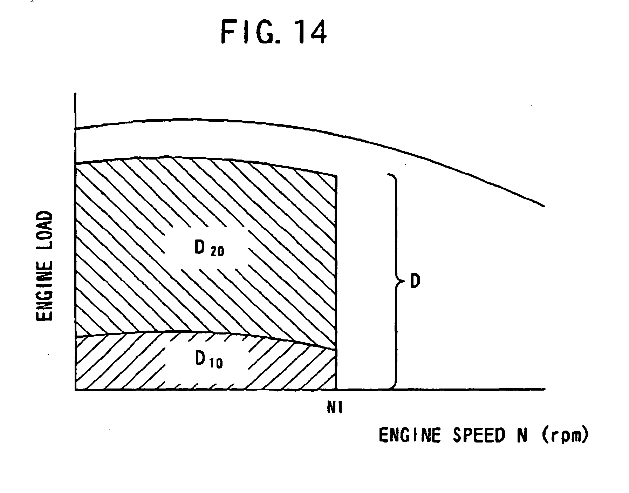

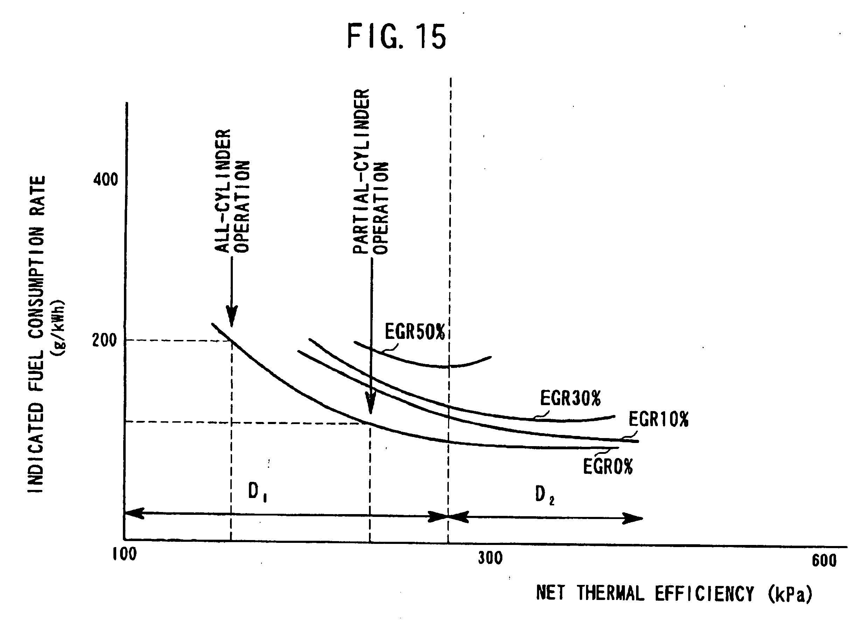

With reference to FIGS. 14 and 15, another embodiment of the present invention will be described. FIG. 14 is a graph showing one example of characteristic curves defining operating ranges, for use in controlling the engine depending on operational states in a control system according to another embodiment.

Referring to FIG. 14, in the illustrated embodiment, a compression-ignition operation is performed in a partial-load operating range D where an engine speed N is equal to or less than a given value N1, and a spark-ignited enforced ignition operation is performed in the remaining operating range.

In the operating range for performing the compression-ignition operation, a partial-cylinder operation for operating only a part of the cylinders 24 is performed in a low load-side operating range (a low load-side operating range having an engine load equal to or less than a given low-load threshold) $D_{10}$. The partial-cylinder operation in the low load-side operating range makes it possible to increase a load per working cylinder in the low load-side operating range, such as idling range, having poor combustion stability, so as to provide enhanced combustion stability without increasing an in-cylinder temperature T. In the illustrated embodiment, the inline four-cylinder engine is employed, and the intermediate 2nd and 3rd cylinders are selected as a working cylinder 24 during the partial-cylinder operation. Thus, in the illustrated embodiment, the cylinders 24 which are hardly cooled and maintained at a relatively high temperature can be effectively utilized to perform the compression-ignition operation. In a high load-side operating range $D_{20}$ having an engine load greater than that in the low load-side operating range, all of the cylinders 24 is operated to perform the compression-ignition operation. The operating range D may be extended to a higher load side, and the high load-side operation range $D_{20}$ may be divided into two or more ranges to perform a partial-cylinder operation in a multi-stage manner. For example, in a V 6 or V9 engine, a partial-cylinder operation for operating only 2nd, 3rd and 6th cylinders may be performed. Further, in a V 12 engine, a partial-cylinder operation for operating only 6th, 9th and 12th cylinders may be performed.

An in-cylinder temperature is adjusted by the intake-air temperature. Specifically, the in-cylinder temperature may be adjusted by storing a target intake-air temperature and a target intake-air volume for each operational state of the engine, on the memory 102 in the form of a control map, reading from the control map values of a target intake-air temperature T and a target intake-air volume for the cylinders, corresponding to an operational state determined based on detection values from the airflow sensor SW1, the intake-air temperature sensor SW2, the accelerator opening sensor SW6 and the temperature sensors SW7, SW8, and adjusting respective openings of the throttle valve 47, the control valves 44 and the three-way solenoid valve 48.

A control factor for determining the operating range $D_{10}$ will be described below.

As mentioned above, a relationship between crank angle and heat release rate $(dQ/d\theta)$ is expressed by the graphs as shown in FIGS. 10 to 12. As shown in FIGS. 10 and 11, when the engine 20 is operated based on the compression ignition in a no load state, the in-cylinder temperature T is required to be set at T1 (= 270°C). At this temperature T1, the maximum heat release rate $[(dQ/d\theta)$ MAX] appears before a compression top dead center. Further, even at T2 (= 250°C) less than T1 by 20°C, the maximum heat release rate $[(dQ/d\theta)$ MAX] still appears before the compression top dead center. Then, as indicated by the curves (see FIG. 11) of in-cylinder temperatures T3 (= 225°C), T4 (= 205°C), T5 (= 190°C), T6 (= 175°C) and T7 (= 160°C), when the engine load is increased, the maximum heat release rate $[(dQ/d\theta)$ MAX] appears after the compression top dead center. Based on these characteristics, in this embodiment, a given partial-cylinder operation is performed in the operating range $D_0$ to relatively increase the engine load so as to allow the compression-ignition operation to be performed under the condition of a relatively low in-cylinder temperature T.

When the in-cylinder temperature characteristic curves T1 to T7 are superimposed on each other, the heat release rates $(dQ/d\theta)$ generally form a chevron-shaped knock limit curve having a peak at a given value (about 80 J/deg·m³) (see FIG. 12). Thus, in this embodiment, based on this given heat release rates $(dQ/d\theta)$ (about 80 J/deg·m³), a given low load curve as a boundary between the operation ranges $D_{10}$, $D_{20}$ is set in a range where an air-fuel ratio to be set in an operational state when an in-cylinder air-fuel ratio in the working cylinder is leaner than a theoretical air-fuel ratio, and the throttle valve is fully opened, is $\lambda$ =2 or less.

FIG. 15 is a graph showing a relationship between net thermal efficiency (IMEP) and indicated fuel consumption (ISFC) at 1500 rpm.

Referring to FIG 15, if all of the cylinders 24 are operated in the operation range $D_{10}$ under the condition of no external EGR, a net thermal efficiency will be about 200. In contrast, when a partial-cylinder operation is performed in the operation range $D_{10}$, the net thermal efficiency is drastically reduced due to increased load per working cylinder.

Further, as shown in FIG 15, it was found that, when EGR gas is introduced in the operating ranges $D_{10}$, $D_{20}$, the net thermal efficiency is increased as an EGR ratio is increased, and the net thermal efficiency is lowered as the engine load becomes higher. Thus, in this embodiment, at least in a high load side of the high load-side operating range $D_{20}$, the external EGR system is activated to introduce EGR gas to provide slower combustion so as to prevent the occurrence of knocking and obtain enhanced emission performance to allow the operating range capable of performing the compression-ignition operation to be extended to a higher load operating range.

Preferably, the control in this embodiment is performed in combination with the control as in the first embodiment where, in the operating range for performing the compression-ignition operation, the intake-air temperature is maintained at a relatively high value in the low load-side operating range having an engine load equal to or less than the given low-load threshold, and, when the engine load exceeds the given low-load threshold, the level of intake-air heating is reduced.

In this case, the operation range $D_{10}$ corresponds to a low load side of the low load-side operating region ($D_1$, $D_0$ in FIG. 8) in the first embodiment. In this operating region, the partial-cylinder operation is performed while adjusting the in-cylinder temperature (intake-air temperature) to an extent capable of preventing the occurrence of preignition or premature combustion. Further, a low load side of the operation range $D_{20}$ corresponds to the operation range $D_1$ in FIG. 8. In this operation range, the intake-air temperature is maintained at a relatively high value (e.g. T3 in FIG. 11). Further, in a high load side of the operation range $D_{20}$, the level of intake-air heating may be reduced along with an increase in engine load.

As described above, according to this embodiment, in the partial-load operating range D, the so-called compression-ignition operation can be performed to achieve enhanced fuel economy and emission performance. Further, in the operating range D for performing the compression-ignition operation, the partial-cylinder operation for operating only a part of the cylinders 24 can be performed in the low load-side operating range $D_{10}$ to increase a load per working cylinder 24 and provide enhanced combustion stability in the working cylinder even if it has a relatively low in-cylinder temperature. This makes it possible to achieve the compression ignition under the condition of a relatively low in-cylinder temperature in the low load-side operating range $D_{10}$ where the compression-ignition operation is most likely to become unstable. Thus, enhanced fuel economy can be maintained in the low load-side operating range $D_{10}$ while avoiding the risk of preignition which would be caused by increasing an in-cylinder temperature. Further, in response to the transition from the low load-side operating range to the high load-side operating range, the number of working cylinders 24 can be increased to prevent the occurrence of knocking during a high load operation.

In this embodiment, the low load-side operating range $D_{10}$ includes a post-warm-up idling range. According to this embodiment, the compression ignition can also be performed in the idling range which is frequently used, to provide further enhanced fuel economy and emission performance.

In this embodiment, the engine includes the external EGR system 60 for recirculating EGR gas consisting of a part of burnt gas to the intake passage 46, and the control unit 100 controls the external EGR system 60 in such a manner as to introduce the EGR gas into the intake passage at least in a high load side of the operating range for performing the compression-ignition operation, and stop introducing the EGR gas in the low load-side operating range $D_{10}$. According to this embodiment, during the compression-ignition operation, EGR gas can be introduced into the intake passage in the high load-side operating range $D_{20}$ to suppress an increase in in-cylinder temperature based on the EGR gas. This makes it possible to avoid the occurrence of knocking and allow the operating range D capable of performing the compression-ignition operation to be extended to a higher load operating range. Further, in the low load-side operating range $D_{10}$ including the idling range, the EGR gas can be stopped to maintain high fuel economy. In addition, the compression-ignition operation is performed in the low load-side operating range $D_{10}$. Thus, even if the EGR gas is not introduced, the emission performance can be maintained at a high level.

In this embodiment, the control unit 100 controls the external EGR system 60 in such a manner as to introduce the EGR gas into the intake passage when all of the cylinders 24 are operated under the compression-ignition operation. According to this embodiment, a knock limit during the compression-ignition operation can be extended to a higher load operating range.

In this embodiment, the switching point between the operating ranges $D_{10}$, $D_{20}$ (the given low-load threshold) is set based on an engine load which has a given maximum heat release rate ($dQ/d\theta$) causing an increase in occurrence frequency of knocking in the working cylinder during the partial-cylinder operation. According to this embodiment, an operating range providing enhanced fuel economy can be frequently used.

In this embodiment, the throttle valve 47 is used as air-fuel ratio adjusting means for adjusting an air-fuel ratio under control of the control unit 100. A forced-ignition operation is performed in a high load having an engine load greater than the partial-load operating range D, and the control unit 100 controls the throttle valve 47 in such a manner as to adjust an air-fuel ratio during the compression-ignition operation at a leaner value than a theoretical air-fuel ratio. According to this embodiment, in the operating range D for performing the compression-ignition operation, an air-fuel ratio is set at a leaner value than a theoretical air-fuel ratio. This makes it possible to satisfy both the needs for avoiding knocking and improving fuel economy.

As above, according to this embodiment, the partial-cylinder operation is performed in the low load-side oper-

ating range $D_{10}$ where the compression-ignition operation is most likely to become unstable, to provide a significant effect of being able to avoid preignition which would be caused by increasing the in-cylinder temperature T, and maintain enhanced fuel economy in the low load-side operating range $D_{10}$.

The present invention has been described by taking the above preferred embodiments thereof as an example. It is to be understood that the present invention is not limited to such specific embodiments. For example, as a technique of introducing EGR gas, in addition to the aforementioned technique of operating the external EGR system, a technique of modifying the setting of the variable valve timing mechanism 40 in such a manner as to overlap between respective open timings of the intake valve 30 and the exhaust valve 31 or achieving a so-called negative overlap may be used.

It will be understood by those skilled in the art that various other modifications and changes may be made without departing from the scope of the present invention.

As mentioned above, the present invention allows an operating range capable of perfonning the compression-ignition operation to be extended to a higher load operating range to achieve enhanced fuel economy in the higher load operating range. This makes it possible to provide a significant effect of being able to achieve the compression-ignition operation in a wider operating range.

Although the present invention has been described in term of specific exemplary embodiments, it will be appreciated that various changes and modifications may be made by those skilled in the art without departing from the scope of the invention, defined in the following claims.

**Claims**

1. A control system for a spark-ignition type engine (20), including:

   intake-air heating means (50, 72, 73) for heating intake-air to be introduced into a cylinder (24) of the engine (20);
   operational-state detection means (SW1 to SW8) for detecting an operational state of the engine (20); and
   control means (100) for controlling said intake-air heating means (50, 72, 73) based on the operational state detected by said operational-state detection means (SW1 to SW8) so as to perform a compression-ignition operation in a given operating range (D),
   said control system being **characterized in that**:

   said given operating range (D) includes a low load-side operating range ($D_0$, $D_1$; $D_{10}$) having an engine load equal to or less than a given low-load threshold and a high load-side operating range ($D_2$; $D_{20}$) having an engine load greater than said given low-load threshold; and
   said control means (100) is operable to control said intake-air heating means (50, 72, 73) in such a manner as to maintain an intake-air temperature at a relatively high value in said low load-side operating region ($D_0$, $D_1$; $D_{10}$), and, after the engine load exceeds said given low-load threshold, gradually lower the intake-air temperature along with an increase in engine load to allow the compression-ignition operation to be performed in said high load-side operating range ($D_2$; $D_{20}$).

2. The control system according to claim 1, **characterized in that** said control means (100) is operable to control said intake-air heating means (50, 72, 73) in such a manner as to maintain the intake-air temperature at a given relatively high value in a region of said low load-side operating range ($D_0$, $D_1$; $D_{10}$) where a maximum heat release rate appears at or after a compression top dead center.

3. The control system according to claim 2, **characterized in that** said control means (100) is operable to control said intake-air heating means (50, 72, 73) in such a manner as to maintain the intake-air temperature at a minimum value allowing for a compression ignition in a region of said low load-side operating range ($D_0$, $D_1$; $D_{10}$) where a maximum heat release rate appears before the compression top dead center.

4. The control system according to any one of claims 1 to 3, further comprising ignition-timing advance means (35, 100) for advancing an ignition timing in said high load-side operating range ($D_2$; $D_{20}$).

5. The control system according to claim 4, **characterized in that** said ignition-timing advance means comprises a plurality of spark plugs (34) each disposed at a different position in said cylinder (24) and adapted to be activated at a timing before initiation of a compression ignition, under control of said control means (100).

6. The control system according to any one of claims 1 to 5, further comprising combustion-speed increase means (35, 100) for increasing a combustion speed of an ignited air-fuel mixture in said high load-side operating range ($D_2$;

$D_{20}$).

7.  The control system according to claim 6, **characterized in that** said combustion-speed increase means comprises a plurality of spark plugs (34) each disposed at a different position in said cylinder (24) and adapted to be activated at a timing after initiation of a compression ignition, under control of said control means (100).

8.  The control system according to any one of claims 4 to 7, **characterized in that**:

    said engine (20) includes an external EGR system (60) for recirculating EGR gas to an intake passage (28, 42, 46) of the engine (20); and
    said control means (100) is operable to control said external EGR system (60) in such a manner as to introduce the EGR gas into the intake passage (28, 42, 46) at least in a high load side of said high load-side operating range ($D_2$; $D_{20}$).

9.  The control system according to any one of claims 1 to 8, **characterized in that** said engine (20) has a cylinder-bore axis (Z) which is offset rightward from a rotation center (O) of a crankshaft (21) of the engine (20) when viewed from a side where said crankshaft (21) is rotated clockwise.

10. The control system according to any one of claims 1 to 9, **characterized in that** said control means (100) is operable, in response to a transition from said high load-side operating range ($D_2$; $D_{20}$) to a high load operating range having an engine load greater than that in said high load-side operating range ($D_2$; $D_{20}$), to deactivate said intake-air heating means (50, 72, 73) and perform a spark ignition.

11. The control system according to claim 1, **characterized in that** said engine (20) includes:

    plural number of the cylinders (24) each adapted to perform therein a combustion of an air-fuel mixture;
    fuel injection means (32) for controllably injecting fuel into each of said combustion chamber, independently; and
    ignition means (34) for igniting a mixture of the introduced intake-air and the injected fuel in each of said cylinders (24),
    wherein said control means (100) is operable to control said intake-air heating means (50, 72, 73), said fuel injection means (32) and said ignition means (34) in such a manner as to perform a partial-cylinder operation for operating only a part of the cylinders (24) in said low load-side operating range ($D_0$, $D_1$; $D_{10}$), and increase the number of working cylinders (24) in said high load-side operating range ($D_2$; $D_{20}$).

12. The control system according to claim 11, **characterized in that** said low load-side operating range ($D_0$,; $D_{10}$) includes a post-warm-up idling range.

13. The control system according to claim 11 or 12, **characterized in that**:

    said engine (20) includes an external EGR device (60) for recirculating EGR gas consisting of a part of burnt gas to an intake passage (28, 42, 46) of the engine (20); and
    said control means (100) is operable to control said external EGR device (60) in such a manner as to introduce the EGR gas into the intake passage (28, 42, 46) at least in a part of said high load-side operating range ($D_2$; $D_{20}$), and stop introducing the EGR gas in said low load-side operating range ($D_0$, $D_1$; $D_{10}$).

14. The control system according to claim 13, **characterized in that** said control means (100) is operable to control said external EGR device (60) in such a manner as to introduce the EGR gas into the intake passage (28, 42, 46) when all of said plurality of cylinders (24) are operated under the compression-ignition operation.

15. The control system according to any one of claims 11 to 14, **characterized in that** said given low-load threshold is set based on an engine load which has a given maximum heat release rate causing an increase in occurrence frequency of knocking in the working cylinder (24) during said partial-cylinder operation.

16. The control system according to any one of claims 11 to 15, **characterized in that**:

    said engine (20) includes air-fuel ratio adjusting means (47) for adjusting an air-fuel ratio; and
    said control mean (100) is operable, in response to a transition from said high load-side operating range ($D_2$; $D_{20}$) to a high load operating range having an engine load greater than that in said high load-side operating

range (D$_2$; D$_{20}$), to perform a forced-ignition operation using said ignition means (34) and control said air-fuel ratio adjusting means (47) in such a manner as to adjust an air-fuel ratio during the compression-ignition operation at a leaner value than a theoretical air-fuel ratio.

**Patentansprüche**

1. Steuer- bzw. Regelsystem für einen Ottomotor bzw. Motor mit Fremdzündung (20), enthaltend:

   Ansaugluft-Erwärmungsmittel (50, 72, 73) zum Erwärmen von Ansaugluft, die in einen Zylinder (24) des Motors (20) einzubringen ist;
   Betriebszustand-Detektionsmittel (SW1 bis SW8) zum Detektieren eines Betriebszustands des Motors (20); und
   Steuer- bzw. Regelmittel (100) zum Steuern bzw. Regeln der Ansaugluft-Erwärmungsmittel (50, 72, 73) basierend auf dem Betriebszustand, der von den Betriebszustand-Detektionsmitteln (SW1 bis SW8) detektiert wird, um einen Kompressions- bzw. Selbstzündungsvorgang in einem vorgegebenen Betriebsbereich (D) durchzuführen,
   wobei das Steuer- bzw. Regelsystem **dadurch gekennzeichnet ist, dass**
   der vorgegebene Betriebsbereich (D) einen Niederlastseite-Betriebsbereich (D$_0$, D$_1$; D$_{10}$) mit einer Motorlast, die gleich oder geringer ist als ein vorgegebener Niederlastschwellenwert, und einen Hochlastseite-Betriebsbereich (D$_2$; D$_{20}$) mit einer Motorlast enthält, die größer ist als der vorgegebene Niederlastschwellenwert; und das Steuer- bzw. Regelmittel (100) betätigbar ist, um die Ansaugluft-Erwärmungsmittel (50, 72, 73) auf eine solche Weise zu steuern bzw. zu regeln, dass die Ansauglufttemperatur in dem Niederlastseite-Betriebsbereich (D$_0$, D$_1$; D$_{10}$) auf einem relativ hohen Wert gehalten wird und, nachdem die Motorlast den vorgegebenen Niederlastschwellenwert überschreitet, die Ansauglufttemperatur graduell zusammen bzw. einhergehend mit einer Zunahme der Motorlast zu verringern, um zu erlauben, dass der Selbstzündungsvorgang in dem Hochlastseite-Betriebsbereich (D$_2$; D$_{20}$) durchgeführt wird.

2. Steuer- bzw. Regelsystem nach Anspruch 1, **dadurch gekennzeichnet, dass** das Steuer- bzw. Regelmittel (100) betätigbar ist, um die Ansaugluft-Erwärmungsmittel (50, 72, 73) auf eine solche Weise zu steuern bzw. zu regeln, dass die Ansauglufttemperatur in einer Region des Niederlastseite-Betriebsbereichs (D$_0$, D$_1$; D$_{10}$) auf einem vorgegebenen, relativ hohen Wert gehalten wird, wo eine maximale Wärmefreisetzrate an oder nach einem oberen Kompressions- bzw. Verdichtungstotpunkt auftritt.

3. Steuer- bzw. Regelsystem nach Anspruch 2, **dadurch gekennzeichnet, dass** das Steuer- bzw. Regelmittel (100) betätigbar ist, um die Ansaugluft-Erwärmungsmittel (50, 72, 73) auf eine solche Weise zu steuern bzw. zu regeln, dass die Ansauglufttemperatur auf einem minimalen Wert gehalten wird, der eine Selbstzündung in einer Region des Niederlastseite-Betriebsbereichs (D$_0$, D$_1$; D$_{10}$) erlaubt, wo eine maximale Wärmefreisetzrate vor dem oberen Verdichtungstotpunkt auftritt.

4. Steuer- bzw. Regelsystem nach einem der Ansprüche 1 bis 3, ferner umfassend Zündungszeitpunkt-Vorrück- bzw. -Vorstellmittel (35, 100) zu Vorstellen eines Zündungszeitpunkts in dem Hochlastseite-Betriebsbereich (D$_2$; D$_{20}$).

5. Steuer- bzw. Regelsystem nach Anspruch 4, **dadurch gekennzeichnet, dass** das Zündungszeitpunkt-Vorstellmittel eine Mehrzahl von Zündkerzen (34) umfasst, die jeweils an einer unterschiedlichen Position in dem Zylinder (24) angeordnet sind und angepasst sind, zu einem Zeitpunkt vor dem Veranlassen einer Selbstzündung aktiviert zu werden, und zwar unter Kontrolle bzw. Steuerung bzw. Regelung des Steuer- bzw. Regelmittels (100).

6. Steuer- bzw. Regelsystem nach einem der Ansprüche 1 bis 5, ferner umfassend Verbrennungsgeschwindigkeit-Erhöhungsmittel (35, 100) zum Erhöhen einer Verbrennungsgeschwindigkeit eines entzündeten Luft-Kraftstoff-Gemischs in dem Hochlastseite-Betriebsbereich (D$_2$; D$_{20}$).

7. Steuer- bzw. Regelsystem nach Anspruch 6, **dadurch gekennzeichnet, dass** das Verbrennungsgeschwindigkeit-Erhöhungsmittel eine Mehrzahl von Zündkerzen (34) umfasst, die jeweils an einer unterschiedlichen Position in dem Zylinder (24) angeordnet sind und angepasst sind, zu einem Zeitpunkt vor dem Veranlassen einer Selbstzündung aktiviert zu werden, und zwar unter Kontrolle bzw. Steuerung bzw. Regelung des Steuer- bzw. Regelmittels (100).

8. Steuer- bzw. Regelsystem nach einem der Ansprüche 4 bis 7, **dadurch gekennzeichnet, dass**:

der Motor (20) ein externes EGR-System (60) zum Rezirkulieren von EGR-Gas zu einem Ansaugdurchgang (28, 42, 46) des Motors (20) enthält; und

das Steuer- bzw. Regelmittel (100) betätigbar ist, um das externe EGR-System (60) auf eine solche Weise zu steuern bzw. zu regeln, dass das EGR-Gas in den Ansaugdurchgang (28, 42, 46) zumindest in einer Hochlastseite des Hochlastseite-Betriebsbereichs ($D_2$; $D_{20}$) eingebracht wird.

9.  Steuer- bzw. Regelsystem nach einem der Ansprüche 1 bis 8, **dadurch gekennzeichnet, dass** der Motor (20) eine Zylinderbohrungsachse (Z) aufweist, die von einem Drehzentrum (O) einer Kurbelwelle (21) des Motors (20) nach rechts versetzt ist, und zwar von einer Seite aus betrachtet, wo die Kurbelwelle (21) im Uhrzeigersinn gedreht ist.

10. Steuer- bzw. Regelsystem nach einem der Ansprüche 1 bis 9, **dadurch gekennzeichnet, dass** das Steuer- bzw. Regelmittel (100) ansprechend auf einen Übergang von dem Hochlastseite-Betriebsbereich ($D_2$; $D_{20}$) zu einem Hochlast-Betriebsbereich, der eine Motorlast aufweist, die größer ist als diejenige in dem Hochlastseite-Betriebsbereich ($D_2$; $D_{20}$), betätigbar ist, um die Ansaugluft-Erwärmungsmittel (50, 72, 73) zu deaktivieren und eine Fremdzündung durchzuführen.

11. Steuer- bzw. Regelsystem nach Anspruch 1, **dadurch gekennzeichnet, dass** der Motor (20) enthält:

    die Zylinder (24) in mehrfacher Zahl, die jeweils angepasst sind, darin eine Verbrennung eines Luft-Kraftstoff-Gemischs durchzuführen;
    Kraftstoffeinspritzmittel (32) zum steuerbaren bzw. regelbaren Einspritzen von Kraftstoff in jeden der Verbrennungsräume, und zwar auf unabhängige Weise; und
    Zündmittel (34) zum Zünden bzw. Entzünden eines Gemischs aus in jeden der Zylinder (24) eingebrachten Ansaugluft und dem eingespritzten Kraftstoff,
    wobei das Steuer- bzw. Regelmittel (100) betätigbar ist, um das Ansaugluft-Erwärmungsmittel (50, 72, 73), das Kraftstoffeinspritzmittel (32) und das Zündmittel (34) auf eine solche Weise zu steuern bzw. zu regeln, dass ein Teilzylindervorgang durchgeführt wird, um nur einen Teil der Zylinder (24) in dem Niederlastseite-Betriebsbereich ($D_0$, $D_1$; $D_{10}$) zu betätigen und die Anzahl an Arbeitszylindern (24) in dem Hochlastseite-Betriebsbereich ($D_2$; $D_{20}$) zu erhöhen.

12. Steuer- bzw. Regelsystem nach Anspruch 11, **dadurch gekennzeichnet, dass** der Niederlastseite-Betriebsbereich ($D_0$; $D_{10}$) einen Vorerwärmungsleerlaufbereich enthält.

13. Steuer- bzw. Regelsystem nach Anspruch 11 oder 12, **dadurch gekennzeichnet, dass**:

    der Motor (20) eine externe EGR-Vorrichtung (60) zum Rezirkulieren von EGR-Gas, das aus einem Teil verbrannten Gases entsteht, zu einem Ansaugdurchgang (28, 42, 46) des Motors (20) enthält; und
    das Steuer- bzw. Regelmittel (100) betätigbar ist, um die externe EGR-Vorrichtung (60) auf eine solche Weise zu steuern bzw. zu regeln, dass das EGR-Gas in den Ansaugdurchgang (28, 42, 46) zumindest in einem Teil des Hochlastseite-Betriebsbereichs ($D_2$; $D_{20}$) eingebracht wird und das Einbringen von EGR-Gas in den Niederlastseite-Betriebsbereich ($D_0$, $D_1$; $D_{10}$) gestoppt wird.

14. Steuer- bzw. Regelsystem nach Anspruch 13, **dadurch gekennzeichnet, dass** das Steuer- bzw. Regelmittel (100) betätigbar ist, um die externe EGR-Vorrichtung (60) auf eine solche Weise zu steuern bzw. zu regeln, dass das EGR-Gas in den Ansaugdurchgang (28, 42, 46) eingebracht wird, wenn alle der Mehrzahl von Zylindern (24) unter bzw. in dem Selbstzündungsvorgang betätigt bzw. betrieben werden.

15. Steuer- bzw. Regelsystem nach einem der Ansprüche 11 bis 14, **dadurch gekennzeichnet, dass** der vorgegebene Niederlastschwellenwert basierend auf einer Motorlast festgelegt wird, die eine vorgegebene maximale Wärmefreisetzrate aufweist, die bzw. was eine Erhöhung der Auftretensfrequenz von Klopfen in dem Arbeitszylinder (24) während des Teilzylindervorgangs bewirkt.

16. Steuer- bzw. Regelsystem nach einem der Ansprüche 11 bis 15, **dadurch gekennzeichnet, dass**:

    der Motor (20) Luft-Kraftstoff-Verhältnis-Einstellmittel (47) zum Einstellen eines Luft-Kraftstoff-Verhältnisses enthält; und
    das Steuer- bzw. Regelmittel (100) ansprechend auf einen Übergang von dem Hochlastseite-Betriebsbereich ($D_2$; $D_{20}$) zu einem Hochlast-Betriebsbereich, der eine Motorlast aufweist, die größer ist als diejenige in dem

Hochlastseite-Betriebsbereich (D$_2$; D$_{20}$), betätigbar ist, um einen Zwangs- bzw. Druckzündungsvorgang unter Verwendung der Zündmittel (34) durchzuführen und die Luft-Kraftstoff-Verhältnis-Einstellmittel (47) auf eine solche Weise zu steuern bzw. zu regeln, dass ein Luft-Kraftstoff-Verhältniss während des Selbstzündungsvorgangs bei einem bzw. auf einen magereren Wert bzw. geringeren Magerwert eingestellt wird als ein theoretisches Luft-Kraftstoff-Verhältniss.

**Revendications**

**1.** Dispositif de commande pour un moteur à allumage commandé (20), comprenant :

des moyens de chauffage de l'air d'admission (50, 72, 73) pour chauffer l'air d'admission devant être introduit dans un cylindre (24) du moteur (20) ; et
des moyens de détection de l'état opérationnel (SW1 à SW8) pour détecter un état opérationnel du moteur (20) ; et
un moyen de commande (100) pour commander lesdits moyens de chauffage de l'air d'admission (50, 72, 73) sur la base de l'état opérationnel détecté par lesdits moyens de détection de l'état opérationnel (SW1 à SW8) de façon à effectuer une opération de d'allumage par compression dans une plage de fonctionnement (D) donnée,
ledit dispositif de commande étant **caractérisé en ce que** :

ladite plage de fonctionnement (D) donnée comprend une plage de fonctionnement côté charge faible (D$_0$, D$_1$; D$_{10}$) ayant une charge au moteur égale ou inférieure à un seuil de faible charge donné, et une plage de fonctionnement côté charge élevée (D$_2$ ; D$_{20}$) ayant une charge au moteur supérieure audit seuil de faible charge donné ; et
ledit moyen de commande (100) est opérationnel pour commander lesdits moyens de chauffage de l'air d'admission (50, 72, 73) de façon à maintenir une température d'air d'admission à une valeur relativement élevée dans ladite région de fonctionnement côté charge faible (D$_0$, D$_1$; D$_{10}$), et, après que la charge au moteur a dépassé ledit seuil de charge faible donné, de façon à abaisser graduellement la température d'air d'admission en même temps qu'une augmentation de la charge au moteur pour permettre à l'opération d'allumage par compression d'être effectuée dans ladite plage de fonctionnement côté charge élevée (D$_2$ ; D$_{20}$).

**2.** Dispositif de commande selon la revendication 1, **caractérisé en ce que** ledit moyen de commande (100) est opérationnel pour commander les moyens de chauffage de l'air d'admission (50, 72, 73) de façon à maintenir la température d'air d'admission à une valeur relativement élevée donnée dans une région de ladite plage de fonctionnement côté charge faible (D$_0$, D$_1$; D$_{10}$) dans laquelle un taux de dégagement de chaleur maximal apparaît à un point mort haut de compression ou après un tel point.

**3.** Dispositif de commande selon la revendication 2, **caractérisé en ce que** ledit moyen de commande (100) est opérationnel pour commander lesdits moyens de chauffage de l'air d'admission (50, 72, 73) de façon à maintenir la température d'air d'admission à une valeur minimale permettant un allumage par compression dans une région de ladite plage de fonctionnement côté charge faible (D$_0$, D$_1$; D$_{10}$) dans laquelle un taux de dégagement de chaleur maximal apparaît avant le point mort haut de compression.

**4.** Dispositif de commande selon une quelconque des revendications 1 à 3, comprenant également des moyens de calage de l'allumage (35, 100) pour avancer un calage de l'allumage dans ladite plage de fonctionnement côté charge élevée (D$_2$ ; D$_{20}$).

**5.** Dispositif de commande selon la revendication 4, **caractérisé en ce que** lesdits moyens d'avancement du calage de l'allumage comprennent une pluralité de bougies d'allumage (34) disposées chacune à un endroit différent dans ledit cylindre (24) et adaptées pour être activées à un moment du calage avant le début d'un allumage par compression, sous la commande dudit moyen de commande (100).

**6.** Dispositif de commande selon une quelconque des revendications 1 à 5, comprenant également des moyens d'augmentation de la vitesse de combustion (35, 100) pour augmenter une vitesse de combustion d'un mélange air-carburant allumé dans ladite plage de fonctionnement côté charge élevée (D$_2$ ; D$_{20}$).

**7.** Dispositif de commande selon la revendication 6, **caractérisé en ce que** lesdits moyens d'augmentation de la vitesse de combustion comprennent une pluralité de bougies d'allumage (34) disposées chacune à un endroit différent dans ledit cylindre (24) et adaptées pour être activées à un moment du calage après le début d'un allumage par compression, sous la commande dudit moyen de commande (100).

**8.** Dispositif de commande selon une quelconque des revendications 4 à 7, **caractérisé en ce que** :

ledit moteur (20) comprend un système EGR externe (60) pour recycler les gaz EGR en direction d'un passage d'admission (28, 42, 46) du moteur (20) ; et
ledit moyen de commande (100) est opérationnel pour commander ledit système EGR externe (60) de façon à introduire les gaz EGR dans le passage d'admission (28, 42, 46) au moins dans un côté charge élevée de ladite plage de fonctionnement côté charge élevée ($D_2$ ; $D_{20}$).

**9.** Dispositif de commande selon une quelconque des revendications 1 à 8, **caractérisé en ce que** ledit moteur (20) a un axe d'alésage de cylindre (Z) qui est décalé vers la droite par rapport à un centre de rotation (O) d'un vilebrequin (21) du moteur (20) quand on regarde à partir d'un côté où ledit vilebrequin (21) est en rotation dans le sens horaire.

**10.** Dispositif de commande selon une quelconque des revendications 1 à 9, **caractérisé en ce que** ledit moyen de commande (100) est opérationnel, en réponse à une transition à partir de ladite plage de fonctionnement côté charge élevée ($D_2$ ; $D_{20}$) vers une plage de fonctionnement à charge élevée ayant une charge au moteur supérieure à celle dans ladite plage de fonctionnement côté charge élevée ($D_2$ ; $D_{20}$), pour désactiver lesdits moyens de chauffage de l'air d'admission (50, 72, 73) et effectuer un allumage commandé.

**11.** Dispositif de commande selon la revendication 1, **caractérisé en ce que** ledit moteur (20) comprend :

une pluralité de cylindres (24) adaptés chacun pour y effectuer une combustion d'un mélange air-carburant ;
des moyens d'injection de carburant (32) pour injecter, d'une façon pouvant être commandée, du carburant dans chacune de ladite chambre de combustion, indépendamment ; et
des moyens d'allumage (34) pour allumer un mélange de l'air d'admission introduit et du carburant injecté dans chacun desdits cylindres (24),
où ledit moyen de commande (100) est opérationnel pour commander lesdits moyens de chauffage de l'air d'admission (50, 72, 73), lesdits moyens d'injection de carburant (32) et lesdits moyens d'allumage (34) de façon à effectuer un fonctionnement à cylindres partiels pour faire fonctionner uniquement une partie des cylindres (24) dans ladite plage de fonctionnement côté charge faible ($D_0$, $D_1$; $D_{10}$), et à augmenter le nombre de cylindres (24) en fonctionnement dans ladite plage de fonctionnement côté charge élevée ($D_2$ ; $D_{20}$).

**12.** Dispositif de commande selon la revendication 11, **caractérisé en ce que** ladite plage de fonctionnement côté charge faible ($D_0$, $D_1$; $D_{10}$) comprend une plage de marche au ralenti après réchauffage.

**13.** Dispositif de commande selon la revendication 11 ou 12, **caractérisé en ce que** :

ledit moteur (20) comprend un système EGR externe (60) pour recycler les gaz EGR constitués d'une partie des gaz brûlés en direction d'un passage d'admission (28, 42, 46) du moteur (20) ; et
ledit moyen de commande (100) est opérationnel pour commander le système EGR externe (60) de façon à introduire les gaz EGR dans le passage d'admission (28, 42, 46) au moins dans une partie de ladite plage de fonctionnement côté charge élevée ($D_2$ ; $D_{20}$) et à arrêter d'introduire les gaz EGR dans ladite plage de fonctionnement côté charge faible ($D_0$, $D_1$; $D_{10}$).

**14.** Dispositif de commande selon la revendication 13, **caractérisé en ce que** ledit moyen de commande (100) est opérationnel pour commander ledit système EGR externe (60) de façon à introduire les gaz EGR dans le passage d'admission (28, 42, 46) quand la totalité de ladite pluralité de cylindres (24) fonctionnent dans une opération d'allumage par compression.

**15.** Dispositif de commande selon une quelconque des revendications 11 à 14, **caractérisé en ce que** ledit seuil de charge faible donné est fixé sur la base d'une charge au moteur qui a un taux de dégagement de chaleur maximal donné provoquant une augmentation de la fréquence de survenue du cognement dans le cylindre (24) en fonctionnement pendant ledit fonctionnement à cylindres partiels.

**16.** Dispositif de commande selon une quelconque des revendications 11 à 15, **caractérisé en ce que** :

ledit moteur (20) comprend des moyens d'ajustement du rapport air-carburant (47) pour ajuster un rapport air-carburant ; et

ledit moyen de commande (100) est opérationnel, en réponse à une transition à partir de ladite plage de fonctionnement côté charge élevée ($D_2$ ; $D_{20}$) vers une plage de fonctionnement à charge élevée ayant une charge au moteur supérieure à celle dans ladite plage de fonctionnement côté charge élevée ($D_2$ ; $D_{20}$), pour effectuer une opération d'allumage forcé à l'aide desdits moyens d'allumage (34) et pour commander lesdits moyens d'ajustement du rapport air-carburant (47) de façon à ajuster un rapport air-carburant pendant l'opération d'allumage par compression à une valeur plus pauvre qu'un rapport air-carburant théorique.

FIG. 1

# FIG. 2

# FIG. 3

FIG. 4

FIG. 5

EP 1 707 791 B1

# FIG. 6

25

FIG. 7

# FIG. 8

# FIG. 9

# FIG. 10

EP 1 707 791 B1

FIG. 11

EP 1 707 791 B1

# FIG. 12

# FIG. 13

COMPRESSION TOP DEAD CENTER

HEAT RELEASE RATE

$dQ/d\theta$

$(J/degm^3)$

CRANK ANGLE CA (deg)

EP 1 707 791 B1

# FIG. 14

# FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003269201 A
- EP I136675172 A
- JP 11006436 A